# EUROPÄISCHE PATENTSCHRIFT

(11) **EP 3 907 052 B1**
(45) Veröffentlichungstag und Bekanntmachung des Hinweises auf die Patenterteilung: **03.09.2025**
(21) Anmeldenummer: 20172954.8
(22) Anmeldetag: 05.05.2020
(51) Int. Cl.: B27B 33/14

(54) **SÄGEKETTE**
SAW CHAIN
CHAÎNE DE SCIE

(43) Veröffentlichungstag der Anmeldung: 10.11.2021
(73) Patentinhaber: Andreas Stihl AG & Co. KG, 71336 Waiblingen (DE)
(72) Erfinder: Maier, Georg, D-71394 Kernen im Remstal (DE); Frei, Thomas, CH-9500 Will (CH); Lux, Thomas, D-73553 Alfdorf (DE)
(74) Vertreter: Reinhardt, Annette

(56) Entgegenhaltungen:
- DE-A1- 4 309 464
- DE-C- 740 549
- US-A- 2 798 381

## Beschreibung

Die Erfindung betrifft eine Sägekette der im Oberbegriff des Anspruchs 1 angegebenen Gattung.

Aus der DE 43 09 464 A1 geht eine Sägekette hervor, deren Nietbolzen an beiden Stirnseiten Vertiefungen aufweisen. Die Vertiefungen sind mit durchgehendem Radius ausgebildet und vergleichsweise groß. Dadurch soll der Lochreibungsdruck zwischen Nietschaft und Nietlochbohrung vergrößert werden, da sich beim Verformungsprozess ein vergrößerter radialer Druck im Vernietungsschaft aufbaut.

Die DE 740 549 C und die US 2 798 381 A offenbaren jeweils Ketten mit einem Kettenschloss, das zum Eingriff eines Schraubendrehers an einer Stirnseite einen Schlitz aufweist.

Der Erfindung liegt die Aufgabe zugrunde, eine Sägekette der gattungsgemäßen Art anzugeben, die eine hohe Standzeit aufweist.

Diese Aufgabe wird durch eine Sägekette mit den Merkmalen des Anspruchs 1 gelöst. Die Aufgabe wird auch durch eine Sägekette mit den Merkmalen des Anspruchs 10 gelöst.

Es hat sich gezeigt, dass ein zu großer radialer Druck am Nietbolzen zu verringerter Standzeit der Sägekette führen kann.

Erfindungsgemäß ist vorgesehen, dass die Vertiefung einen Vertiefungsrand aufweist, dessen Abstand zur Mittelebene der Sägekette mit zunehmendem radialem Abstand zur Nietbolzenachse zunimmt. Die Vertiefung weist außerdem einen Vertiefungsboden auf, der vom Vertiefungsrand umschlossen ist, wobei der Abstand des Vertiefungsbodens zur Mittelebene der Sägekette mit zunehmendem radialem Abstand zur Nietbolzenachse an keiner Stelle des Vertiefungsbodens zunimmt. Der größte Abstand des Vertiefungsbodens zur Nietbolzenachse entspricht 30 % bis 100 % des halben Kerndurchmessers des Nietbolzens.

Es hat sich gezeigt, dass durch die angegebene Gestaltung die auf die Öffnung im angrenzenden Verbindungsglied wirkenden Radialkräfte verringert und dennoch gleichzeitig eine große Festigkeit der Nietverbindung erreicht werden kann. Dadurch, dass der Abstand des Vertiefungsbodens zur Mittelebene der Sägekette mit zunehmendem radialem Abstand zur Nietbolzenachse an keiner Stelle des Vertiefungsbodens zunimmt, werden im Bereich des Vertiefungsbodens während der Vernietung nur vergleichsweise geringe radiale Kräfte in die Öffnung des Verbindungsglieds eingeleitet. Der Niet wird in dem Bereich um die Nietbolzenachse, der von dem Vertiefungsboden in Richtung der Nietbolzenachse gesehen überdeckt ist, gestaucht. Dadurch werden hohe Vernietungskräfte erzielt.

Der halbe Kerndurchmesser ist bei Nietbolzen mit kreisförmigem Querschnitt der kleinste Radius des Nietbolzens. Bei Nietbolzen mit Bund im Treibglied entspricht der halbe Kerndurchmesser dem Radius des Nietbolzens in einem Verbindungsglied.

Der Nietbolzen kann separat von den beiden Verbindungsgliedern und dem Treibglied, die der Nietbolzen gelenkig miteinander verbindet, ausgebildet sein. Der Nietbolzen ragt in diesem Fall jeweils durch Nietöffnungen von zwei Verbindungsgliedern und eine Nietöffnung eines zwischen den Verbindungsgliedern angeordneten Treibglieds. In alternativer Ausführung kann vorgesehen sein, dass der Nietbolzen einteilig mit einem der Verbindungsglieder ausgebildet ist und durch eine Nietöffnung eines Treibglieds und eine Nietöffnung des gegenüberliegenden Verbindungsglieds ragt. Die Vertiefung ist vorteilhaft an der Seite eines Nietbolzens angeordnet, an der der Nietbolzen durch eine Nietöffnung eines Verbindungsglieds ragt und mit dem Verbindungsglied verbunden ist.

Der größte Abstand des Vertiefungsbodens zur Nietbolzenachse entspricht vorteilhaft mindestens 50 % des halben Kerndurchmessers des Nietbolzens. Durch die angegebene Mindestgröße des Vertiefungsbodens können die in den Vertiefungsboden eingeleiteten Kräfte während der Vernietung begrenzt und dadurch übermäßige Materialbelastungen vermieden werden.

In besonders vorteilhafter Gestaltung ist der Vertiefungsboden konvex gewölbt ausgebildet. Dadurch werden im Bereich des Vertiefungsbodens die während der Vernietung eingebrachten Kräfte vom Rand der Öffnung des benachbarten Verbindungsglieds weg geleitet und in Richtung auf die Nietbolzenachse gelenkt. Auch ein mindestens abschnittsweise, insbesondere vollständig senkrecht zur Nietbolzenachse verlaufender Vertiefungsboden kann vorteilhaft sein.

Vorteilhaft entspricht der größte Abstand des Vertiefungsbodens zur Nietbolzenachse höchstens 80 % des halben Kerndurchmessers des Nietbolzens.

Der größte Abstand der Vertiefung zur Nietbolzenachse entspricht vorteilhaft mindestens 110 % des größten Abstands des Vertiefungsbodens zur Nietbolzenachse. Dadurch wird ein vergleichsweise geringer Anstieg der Vertiefung im Bereich des Vertiefungsrands, also eine geringe Vergrößerung des Abstands des Vertiefungsrands zur Mittelebene mit zunehmendem Abstand zur Nietbolzenachse, erreicht. Dieser vergleichsweise geringe Anstieg der Vertiefung im Bereich des Vertiefungsrands sorgt für eine günstige Krafteinleitung.

Die Tiefe der Vertiefung ist vorzugsweise vergleichsweise klein. Die Tiefe der Vertiefung ist parallel zur Nietbolzenachse gemessen. Die Tiefe der Vertiefung ist die Differenz des größten Abstands des Vertiefungsrands zur Mittelebene und des kleinsten Abstands des Vertiefungsbodens zur Mittelebene. Die Tiefe der Vertiefung ist vorteilhaft kleiner als der größte Abstand des Vertiefungsbodens zur Nietbolzenachse. Die Tiefe der Vertiefung beträgt insbesondere weniger als 40 %, vorteilhaft weniger als 30 % des größten Abstands des Vertiefungsbodens zur Nietbolzenachse. Die Vertiefung ist vorteilhaft vergleichsweise flach ausgebildet.

Mindestens eine Stirnseite eines Nietbolzens ist vorteilhaft an einem Nietkopf mit vergrößertem Außendurchmesser ausgebildet, der über die Außenfläche des zugeordneten Verbindungsglieds ragt. Die Vertiefung liegt insbesondere mindestens teilweise außerhalb der Ebene der Außenfläche des zugeordneten Verbindungsglieds. Bevorzugt liegt die Vertiefung vollständig außerhalb der Ebene der Außenfläche des zugeordneten Verbindungsglieds. Das zugeordnete Verbindungsglied ist dabei das Verbindungsglied, das an der gleichen Kettenseite angeordnet ist wie der Nietkopf. Der Nietkopf liegt insbesondere an dem zugeordneten Verbindungsglied an. In alternativer Ausführung kann vorgesehen sein, dass die Stirnseite des Nietbolzens bündig in der Außenfläche des zugeordneten Verbindungsglieds liegt oder gegenüber der Außenfläche zur Mittelebene der Sägekette hin versetzt ist. Die Tiefe der Vertiefung ist insbesondere kleiner als eine in Richtung der Nietbolzenachse gemessene Höhe des Nietkopfs. Die Tiefe der Vertiefung beträgt insbesondere weniger als 50%, vorteilhaft weniger als 30% der Höhe des Nietkopfs.

Vorteilhaft beträgt das Verhältnis des halben vergrößerten Außendurchmessers des Nietkopfs zum größten Abstand des Vertiefungsbodens zur Nietbolzenachse von 1,5 bis 3,5. Besonders vorteilhaft beträgt das Verhältnis des halben vergrößerten Außendurchmessers des Nietkopfs zum größten Abstand des Vertiefungsbodens zur Nietbolzenachse von 2 bis 3,5.

Das Verbindungsglied weist an der Nietöffnung vorteilhaft eine Fase auf. Die Fase ist insbesondere an der Außenseite der Nietöffnung, also an der der Mittelebene abgewandten Seite der Nietöffnung, angeordnet. Die Tiefe der Fase an der Nietöffnung des Verbindungsglieds ist vorteilhaft vergleichsweise klein. Die Tiefe der Fase an der Nietöffnung beträgt vorteilhaft höchstens 30 %, insbesondere höchstens 20 % der Dicke des Verbindungsglieds. Dadurch ist auch der größte Durchmesser der Fase, der an der Außenseite des Verbindungsglieds angeordnet ist, vergleichsweise klein. Für einen Nietbolzen mit einem Nietkopf ist vorteilhaft vorgesehen, dass der Nietkopf die Fase vollständig überdeckt. Der vergrößerte Außendurchmesser des Nietkopfs beträgt vorteilhaft mindestens 120 % des größten Durchmessers der Fase. Der größte Abstand des Vertiefungsbodens zur Nietbolzenachse beträgt vorteilhaft mindestens 20 %, insbesondere mindestens 40 % des halben größten Durchmessers der Fase.

Bei dem Nietbolzen handelt es sich vorteilhaft um einen Bundbolzen. Der Nietbolzen weist vorteilhaft einen Bund auf, der in der Nietöffnung des Treibglieds angeordnet ist. Der Bund ragt vorteilhaft nicht in die Nietöffnungen der Verbindungsglieder. Über den Bundbolzen kann auf einfache Weise ein ausreichender Abstand zwischen den beiden Verbindungsgliedern, durch die der Bundbolzen ragt, sichergestellt werden.

Ein eigenständiger erfinderischer Gedanke nach Anspruch 10 betrifft die Gestaltung der beiden Stirnseiten des Nietbolzens der Sägekette. Der Nietbolzen is als Vollkörper ausgebildet und weist eine erste und eine zweite Stirnseite auf, die unterschiedlich ausgebildet sind. Durch einen Nietbolzen mit unterschiedlicher erster und zweiter Stirnseite können unterschiedliche Kräfte, die an den beiden Stirnseiten des Nietbolzens wirken, oder andere Einflüsse auf die Vernietung, die an den beiden Stirnseiten des Nietbolzens unterschiedlich wirken, zumindest teilweise ausgeglichen werden. Es hat sich insbesondere gezeigt, dass die im Betrieb auf die Sägekette wirkenden Kräfte an beiden Seiten der Sägekette unterschiedlich sein können, beispielsweise aufgrund der Anordnung des Antriebsaggregats oder der Handgriffe, über die die Kräfte im Betrieb eingeleitet werden. Auch über die Schneidglieder werden seitliche Kräfte in die Sägekette eingeleitet, die zu einer unsymmetrischen Belastung der Sägekette im Bereich des jeweiligen Schneidglieds führen können. Es hat sich nun gezeigt, dass durch unterschiedlich gestaltete Stirnseiten eines Nietkopfes eine größere Standzeit der Sägekette erreicht werden kann.

Vorteilhaft weist die zweite Stirnseite die Vertiefung auf, und die erste Stirnseite weist keine Vertiefung auf. Es kann jedoch auch vorgesehen sein, dass die beiden Stirnseiten unterschiedlich gestaltete Vertiefungen aufweisen.

Vorteilhaft ist die erste Stirnseite an einem ersten Nietkopf ausgebildet und die zweite Stirnseite an einem zweiten Nietkopf. Die Nietköpfe ragen dabei vorteilhaft jeweils über die Außenfläche des zugeordneten Verbindungsglieds. Die in Richtung der Nietbolzenachse gemessene Höhe des zweiten Nietkopfs ist vorteilhaft größer als die in Richtung der Nietbolzenachse gemessene Höhe des ersten Nietkopfs. Die beiden Nietköpfe haben demnach in vorteilhafter Gestaltung unterschiedliche Höhen. Die Höhen der Nietköpfe sind bezogen auf die Ebene der Außenfläche des zugeordneten Verbindungsglieds gemessen. Besonders vorteilhaft ist der zweite Nietkopf mit größerer Höhe der Nietkopf, dessen Stirnseite die Vertiefung aufweist, und der erste Nietkopf ist der Nietkopf mit geringerer Höhe, der keine Vertiefung aufweist.

In bevorzugter Gestaltung ist die erste Stirnseite konvex ausgebildet.

In vorteilhafter Gestaltung ist die Krümmung der ersten Stirnseite im Durchmesserbereich des Vertiefungsbodens spiegelsymmetrisch zur Krümmung des Vertiefungsbodens im gleichen Durchmesserbereich an der zweiten Stirnseite. Dadurch werden in dem Durchmesserbereich, in dem an einer Stirnseite ein Vertiefungsboden angeordnet ist, an beiden Stirnseiten ähnliche oder näherungsweise gleiche Kräfte in den Nietbolzen eingeleitet.

Die Differenz des Abstands der ersten Stirnseite am Schnittpunkt der Nietbolzenachse mit der ersten Stirnseite zur Mittelebene und des Abstands der zweiten Stirnseite am Schnittpunkt der Nietbolzenachse mit der zweiten Stirnseite zur Mittelebene beträgt vorteilhaft weniger als 0,3 mm. Die Abstände sind bevorzugt näherungsweise gleich. Die Differenz der Abstände beträgt insbesondere weniger als 0,1 mm. Besonders bevorzugt sind die Abstände im Rahmen der Fertigungstoleranzen gleich groß. Die Mittelpunkte der Stirnseite eines Niets haben vorteilhaft näherungsweise den gleichen Abstand zur Mittelebene.

Vorteilhaft sind alle Stirnseiten auf einer Kettenseite der Sägekette erste Stirnseiten und alle Stirnseiten auf einer gegenüberliegenden, zweiten Kettenseite zweite Stirnseiten. Als besonders bevorzugt für eine Sägekette, die mit einer handgeführten Motorsäge betrieben wird, hat sich herausgestellt, wenn die Stirnseiten auf einer in Laufrichtung rechts angeordneten rechten Kettenseite erste Stirnseiten und die Stirnseiten, die auf einer in Laufrichtung links angeordneten linken Kettenseite angeordnet sind, zweite Stirnseiten sind.

Ein Ausführungsbeispiel der Erfindung wird im Folgenden anhand der Zeichnung erläutert. Es zeigen:
- Fig. 1 und 2: perspektivische Darstellungen eines Ausführungsbeispiels einer Sägekette,
- Fig. 3 und 4: Seitenansichten der Sägekette aus den Fig. 1 und 2,
- Fig. 5: einen Schnitt entlang der Linie V-V in Fig. 3 und
- Fig. 6: die Einzelheit VI aus Fig. 5 in vergrößerter Darstellung.

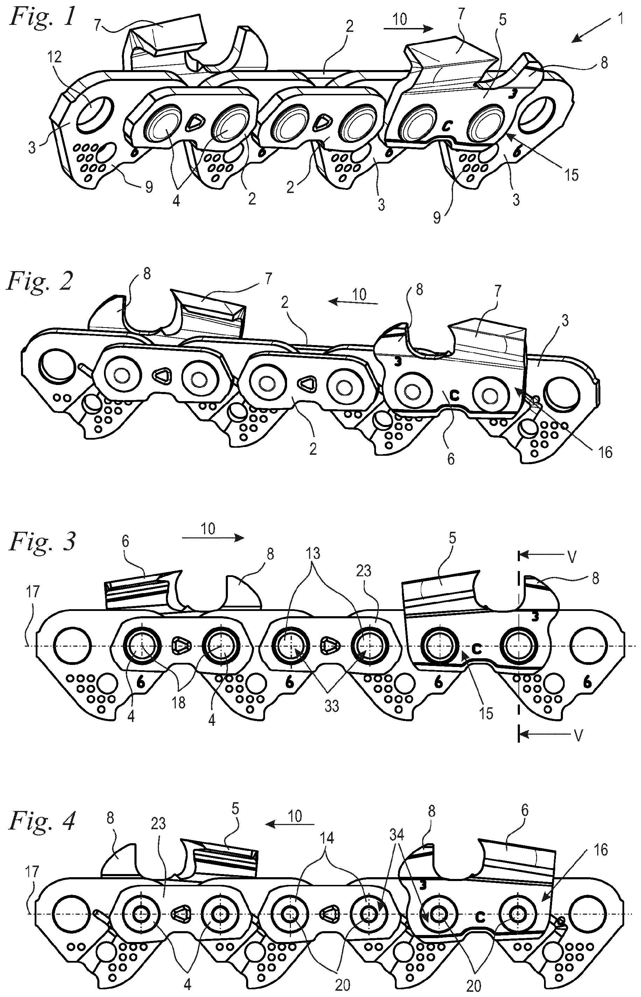

Fig. 1 zeigt in perspektivischer Darstellung eine Sägekette 1. Die Sägekette 1 bewegt sich im Betrieb in einer Laufrichtung 10. Fig. 1 zeigt eine Ansicht auf eine rechte Kettenseite 15. Fig. 2 zeigt eine Ansicht auf die gegenüberliegende, linke Kettenseite 16. Die Sägekette umfasst Verbindungsglieder 2 und Treibglieder 3. Die Treibglieder 3 weisen jeweils einen Treibansatz 9 auf, der zum Eingriff in eine Führungsschiene einer Motorsäge vorgesehen ist. Am Treibansatz 9 ist die Sägekette 1 beispielsweise über ein Antriebsritzel anzutreiben. Die Treibglieder 3 weisen jeweils zwei Nietöffnungen 12 auf. Durch die Nietöffnungen 12 ragen Nietbolzen 4, die die Treibglieder 3 gelenkig mit den Verbindungsgliedern 2 verbinden. Jeder Nietbolzen 3 ragt durch zwei Verbindungsglieder 2 und ein zwischen den beiden Verbindungsgliedern 2 angeordnetes Treibglied 3.

Die Verbindungsglieder 2 sind teilweise als Schneidglieder 5, 6 ausgebildet. Dabei sind rechte Schneidglieder 5 an der rechten Kettenseite 15 angeordnet und linke Schneidglieder 6 an der linken Kettenseite 16 (Fig. 2). Die Schneidglieder 5, 6 weisen jeweils einen Schneidabschnitt 7 auf. Der Schneidabschnitt 7 kann eine geometrisch bestimmte oder eine geometrisch unbestimmte Schneidengeometrie aufweisen. Im Ausführungsbeispiel ist der Schneidabschnitt 7 zur zerspanenden Bearbeitung eines Werkstücks, insbesondere aus Holz, vorgesehen. Der Schneidabschnitt 7 weist eine geometrisch bestimmte Schneidengeometrie auf. In alternativer Ausführung kann vorgesehen sein, dass der Schneidabschnitt 7 zur schleifenden Bearbeitung eines Werkstücks, insbesondere eines Werkstücks aus Beton, ausgebildet ist. Die Schneiden des Schneidabschnitts 7 können beispielsweise aus einer Vielzahl von Schleifkörnern, beispielsweise aus Diamant, gebildet sein. Die Geometrie der Schneiden ist in diesem Fall geometrisch unbestimmt.

Im Ausführungsbeispiel ist vorlaufend zu jedem Schneidabschnitt 7 ein Tiefenbegrenzer 8 angeordnet. Im Ausführungsbeispiel sind der Tiefenbegrenzer 8 und der nachfolgende Schneidabschnitt 7 am gleichen Schneidglied 5, 6 angeordnet.

Die Bezeichnungen "rechte Kettenseite 15" und "linke Kettenseite 16" beziehen sich auf eine Ansicht auf die Sägekette von oben auf die Schneidabschnitte 7, also von den Schneidabschnitten 7 in Richtung zu den Treibansätzen 9. Bei dieser Blickrichtung sind in Laufrichtung die rechte Kettenseite 15 rechts und die linke Kettenseite 16 links angeordnet.

Wie die Fig. 1 und 2 auch zeigen, folgt in Laufrichtung 10 auf ein Paar aus Verbindungsgliedern 2, bei denen ein Verbindungsglied 2 als linkes Schneidglied 6 ausgebildet ist, ein Paar aus Verbindungsgliedern 2 ohne Schneidabschnitt, und darauf folgt ein Paar aus Verbindungsgliedern 2, bei denen ein Verbindungsglied 2 als rechtes Schneidglied 5 ausgebildet ist. Paare von Verbindungsgliedern 2 mit Schneidabschnitt wechseln sich in Laufrichtung 10 mit Paaren von Verbindungsgliedern 2 ohne Schneidabschnitt 7 ab. Rechte Schneidglieder 5 und linke Schneidglieder 6 wechseln sich in Laufrichtung 10 ab.

Auch eine andere Gestaltung der Sägekette 1 kann vorteilhaft sein.

Wie die Fig. 3 und 4 zeigen, weist die Sägekette 10 eine Längsmittelachse 17 auf. Bei langgestreckter Sägekette 1 verläuft die Längsmittelachse 17 parallel zur Laufrichtung 10. Jeder Nietbolzen 4 weist eine Nietbolzenachse 18 auf. Die Nietbolzenachse 18 entspricht der Schwenkachse, um die der Nietbolzen 4 die Verbindungsglieder 2 mit dem dazwischen angeordneten Treibglied 3 gelenkig verbindet. Ist ein Abschnitt der Sägekette 1 gestreckt, so schneiden alle Nietbolzenachsen 18 dieses gestreckten Abschnitts der Sägekette 1 die Längsmittelachse 17 der Sägekette 1.

Wie Fig. 3 zeigt, weisen die Nietbolzen 4 an der rechten Kettenseite 15 Stirnseiten 33 auf. Im Ausführungsbeispiel sind die Stirnseiten 33 aller Nietbolzen 4 an der rechten Kettenseite 15 ohne Vertiefungen ausgebildet. Die Stirnseiten 33 sind im Ausführungsbeispiel an rechten Nietköpfen 13 ausgebildet.

Wie Fig. 4 zeigt, bilden die Nietbolzen 4 im Ausführungsbeispiel an der linken Kettenseite 16 linke Nietköpfe 14. Die Nietbolzen 4 weisen an der linken Kettenseite 16 eine zweite Stirnseite 34 auf. Im Ausführungsbeispiel besitzen alle Nietbolzen 4 an der zweiten Stirnseite 34 eine Vertiefung 20, die im Folgenden noch näher beschrieben wird.

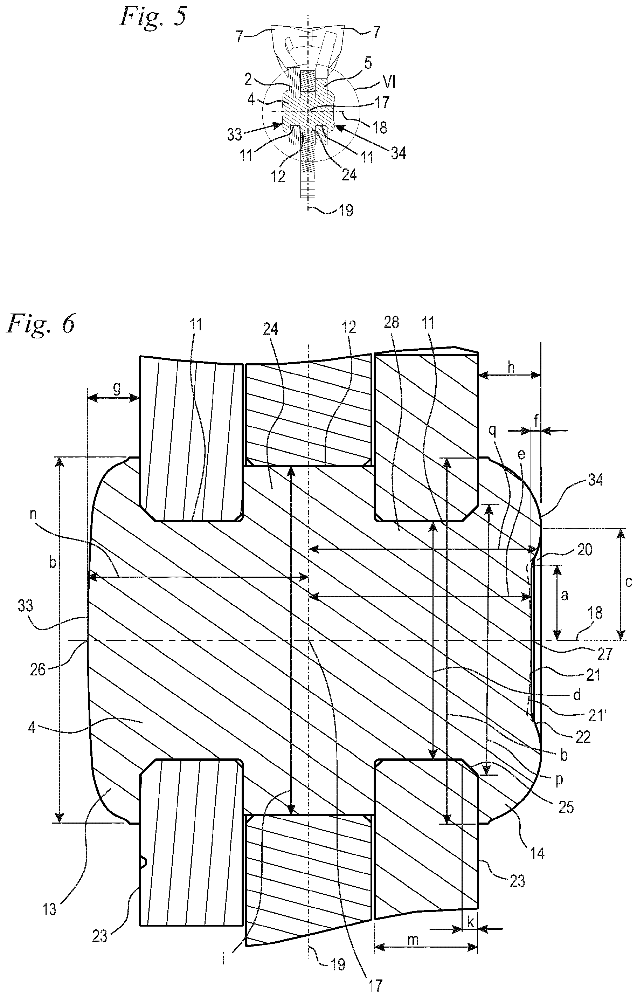

An den Nietköpfen 13, 14 weisen die Nietbolzen 4 einen vergrößerten Außendurchmesser b (Fig. 6) auf. Die Nietköpfe 13, 14 ragen jeweils über eine Außenfläche 23 des zugeordneten Verbindungsglieds 2 hinaus. In alternativer Ausführung kann vorgesehen sein, dass einer oder beide Nietköpfe 13, 14 bündig zur Außenfläche 23 des zugeordneten Verbindungsglieds 2 liegen. Es kann vorgesehen sein, dass einer oder beide Nietköpfe 13, 14 zurückversetzt zur Außenfläche 23 des zugeordneten Verbindungsglieds 2 liegen.

Fig. 5 zeigt einen Schnitt durch einen Nietbolzen 4. Eines der Verbindungsglieder 2 in der Schnittdarstellung von Fig. 5 ist ein rechtes Schneidglied 5. Die Sägekette 1 besitzt eine Mittelebene 19. Die Mittelebene 19 verläuft senkrecht zu den Nietbolzenachsen 18 und mittig durch die Treibglieder 3. Die Mittelebene 19 liegt demnach parallel zur Ebene der Treibglieder 3. Die Mittelebene 19 und die Nietbolzenachsen 18 schneiden sich bei gestreckter Sägekette 1 in der Längsmittelachse 17. Wie Fig. 5 auch zeigt, weisen die Verbindungsglieder Nietöffnungen 11 auf. Der Nietbolzen 4 ragt durch die Nietöffnung 12 des Treibglieds 3 sowie durch die Nietöffnungen 11 der beiden beidseitig des Treibglieds 3 angeordneten Verbindungsglieder 2. Die Nietöffnungen 11 in den Verbindungsgliedern 2 sind kleiner als die Nietöffnung 12 im Treibglied 3. Der Nietbolzen 4 weist einen Bund 24 auf, an dem der Außendurchmesser des Nietbolzens 4 vergrößert ist. Der Bund 24 erstreckt sich in der Nietöffnung 12 des Treibglieds 3. Der Bund 24 ragt nicht in die Nietöffnungen 11 der angrenzenden Verbindungsglieder 2.

Wie Fig. 6 zeigt, weist der Nietbolzen 4 einen Kerndurchmesser d auf. Der Durchmesser der Nietöffnungen 11 der Verbindungsglieder 2 entspricht etwa dem Kerndurchmesser d. Der Nietbolzen 4 weist im Ausführungsbeispiel einen kreisförmigen Querschnitt auf. Der Nietbolzen 4 ist zur Nietbolzenachse 18 rotationssymmetrisch. Auch eine nicht rotationssymmetrische Gestaltung des Nietbolzens 4, insbesondere von Abschnitten des Nietbolzens 4, kann vorteilhaft sein. Der Nietbolzen 4 weist am Bund 24 einen Durchmesser i auf. Der Durchmesser i ist größer als der Kerndurchmesser d. Die Durchmesser der Nietöffnungen 11 und 12 sind auf den Kerndurchmesser d und den Durchmesser i am Bund 24 abgestimmt. Der Durchmesser der Nietöffnung 11 ist kleiner als der Durchmesser i am Bund 24, so dass der Bund 24 nicht in die Nietöffnungen 11 der Verbindungsglieder 2 ragen kann.

Wie Fig. 6 zeigt, ist der Nietbolzen 4 als Vollkörper ausgebildet. Der Nietbolzen 4 ist demnach kein Hohlniet. Der Nietbolzen 4 erstreckt sich durch die Nietöffnungen 11 und 12 und ist im Ausführungsbeispiel separat von beiden Verbindungsgliedern 2 und dem Treibglied 3 ausgebildet. Bei dem Nietbolzen 4 handelt es sich demnach nicht um ein Nietelement, das an einem Verbindungsglied 2 angeformt, also einteilig mit diesem ausgebildet ist. Der Nietbolzen 4 wird bei der Herstellung der Sägekette 1 an beiden Stirnseiten 33 und 34 umgeformt. Dadurch wird der Nietbolzen 4 mit den Verbindungsgliedern 2 fest verbunden.

In alternativer Ausführungsform ist der Nietbolzen 4 an seiner ersten Stirnseite 33 integral mit dem Verbindungsglied 2 ausgebildet. Der Nietbolzen 4 ist an der Stirnseite 33 einteilig mit dem benachbarten Verbindungsglied 2 ausgebildet. An der gegenüberliegenden Seite ragt der Nietbolzen 4 durch die Nietöffnung 11 des gegenüberliegenden Verbindungsglieds 2. Dieses Verbindungsglied 2 ist separat vom Nietbolzen 4 ausgebildet und mit diesem durch einen Nietvorgang verbunden. An dieser Seite des Nietbolzens 4 ist ein Nietkopf 14 angeordnet. An der zweiten Stirnseite 34 ist die Vertiefung 20 angeordnet. Die Vertiefung 20 ist an dem Nietkopf 14 vorgesehen, an dem der Nietbolzen 4 mit einem separat vom Nietbolzen 4 ausgebildeten Verbindungsglied 2 durch eine Vernietung verbunden ist. Die Vertiefung 20 ist an der Seite des Nietbolzens 4 angeordnet, an der der Nietbolzen 4 durch eine Nietöffnung 11 eines Verbindungsglieds 2 ragt. Durch die Vertiefung 20 lässt sich die Verdrehfestigkeit des Nietbolzens 4 in der Nietöffnung 11 des Verbindungsglieds 2 beeinflussen. Eine Seite des Nietbolzens 4 ist einteilig mit einem Verbindungsglied 2 ausgebildet und die andere Seite des Nietbolzens 4 weist die Vertiefung 20 auf.

Im Ausführungsbeispiel ist der vergrößerte Durchmesser b der Nietköpfe 13 und 14 größer als der Kerndurchmesser d. Die Außenflächen 23 der Verbindungsglieder 11 liegen der Mittelebene 19 abgewandt. Die Nietköpfe 13 und 14 ragen über die Außenfläche 23 des jeweils benachbart angeordneten Verbindungsglieds 2. Angrenzend an die Außenfläche 23 weisen die Verbindungsglieder 2 jeweils eine Fase 25 auf. Es kann auch vorgesehen sein, dass nur eines der Verbindungsglieder 2 eine Fase 25 aufweist, oder dass die Fasen 25 der beiden Verbindungsglieder 2 unterschiedlich ausgebildet sind. Die Fasen 25 weisen benachbart zur Außenfläche 23 einen größten Außendurchmesser p auf. Der Durchmesser b der Nietköpfe 13 und 14 ist vorteilhaft größer als der Außendurchmesser p an der Fase 25. Die Nietköpfe 13 und 14 überdecken dadurch in Richtung der Nietbolzenachse 18 die Nietöffnungen 11 vollständig. Der vergrößerte Außendurchmesser b des Nietkopfs 13, 14 beträgt vorteilhaft mindestens 120 % des größten Durchmessers p der Fase 25.

Es ist vorgesehen, dass mindestens eine Stirnseite 33, 34 des Nietbolzens 4 eine Vertiefung 20 aufweist. Im Ausführungsbeispiel ist an der zweiten Stirnseite 34 eine Vertiefung 20 vorgesehen. Die erste Stirnseite 33 weist keine Vertiefung 20 auf. Die Vertiefung 20 weist einen Vertiefungsboden 21 sowie einen Vertiefungsrand 22 auf. Der Vertiefungsrand 22 umschließt den Vertiefungsboden 21. Die Nietbolzenachse 18 schneidet den Vertiefungsboden 21. Im Ausführungsbeispiel sind der Vertiefungsboden 21 und der Vertiefungsrand 22 rotationssymmetrisch um die Nietbolzenachse 18 ausgebildet. Auch eine unsymmetrische Gestaltung zur Nietbolzenachse 18 kann jedoch vorgesehen sein.

Der Vertiefungsboden 21 ist der Bereich der Vertiefung 20, in dem ein Abstand e des Vertiefungsbodens 21 zur Mittelebene 19 mit zunehmendem radialem Abstand zur Nietbolzenachse 18 an keiner Stelle des Vertiefungsbodens 21 zunimmt. Der größte Abstand e des Vertiefungsbodens 21 zur Mittelebene 19 besteht damit zumindest auch am Schnittpunkt des Vertiefungsbodens 21 mit der Nietbolzenachse 18. Der Abstand e ist parallel zur Nietbolzenachse 18 gemessen. Der Schnittpunkt des Vertiefungsbodens 21 mit der Nietbolzenachse 18 entspricht dem Schnittpunkt 27 der zweiten Stirnseite 34 mit der Nietbolzenachse 18. Der Vertiefungsboden 21 weist einen größten Abstand a zur Nietbolzenachse 18 auf. Im Ausführungsbeispiel entspricht der größte Abstand a dem halben Durchmesser des Vertiefungsbodens 21. Der größte Abstand a ist in radialer Richtung zur Nietbolzenachse 18 gemessen. Der Abstand a entspricht dem maximalen radialen Abstand des Vertiefungsbodens 21 zur Nietbolzenachse 18. Der größte Abstand a des Vertiefungsbodens 21 zur Nietbolzenachse 18 entspricht mindestens 30 %, insbesondere mindestens 50 % des halben Kerndurchmessers d des Nietbolzens 4. Dadurch bietet der Vertiefungsboden 21 eine ausreichend große Fläche, um Kräfte bei der Vernietung etwa in Richtung der Nietbolzenachse 18 in den Nietbolzen 4 einzuleiten. Der größte Abstand a des Vertiefungsbodens 21 zur Nietbolzenachse 18 entspricht höchstens 100 % des halben Kerndurchmessers d des Nietbolzens 4. Der Vertiefungsboden 21 erstreckt sich demnach in radialer Richtung zur Nietbolzenachse 18 nicht über einen Nietbolzenabschnitt 28, der in der Nietbolzenöffnung 11 des Verbindungsglieds 2 angeordnet ist, hinaus. Der größte Abstand a des Vertiefungsbodens 21 zur Nietbolzenachse 18 entspricht höchstens 80 % des halben Kerndurchmessers d des Nietbolzens 4.

Der größte Abstand a des Vertiefungsbodens 21 zur Nietbolzenachse 18 beträgt vorteilhaft mindestens 20 %, insbesondere mindestens 40 % des halben größten Durchmessers p der Fase 25.

Es kann vorgesehen sein, dass der Vertiefungsboden 21 teilweise oder vollständig eben verläuft. Dies ist in Fig. 6 mit durchgezogener Linie dargestellt. Alternativ kann auch ein konvex gewölbter Vertiefungsboden 21' vorgesehen sein, der in Fig. 6 mit gestrichelter Linie schematisch dargestellt ist. Die Wölbung des Vertiefungsbodens 21' kann dabei einen sehr großen Radius aufweisen. Der Radius, mit dem der Vertiefungsboden 21' am Schnittpunkt 27 gewölbt ist, ist vorteilhaft größer als der Kerndurchmesser d, insbesondere größer als der Durchmesser b des Nietkopfs 14.

Der Vertiefungsrand 22 weist zur Mittelebene 19 einen Abstand q auf, der vom Vertiefungsboden 21 radial nach außen zunimmt. In Fig. 6 ist der Abstand q für einen mittleren Bereich des Vertiefungsrands 22 schematisch eingezeichnet. Der Abstand q ist parallel zur Nietbolzenachse 18 gemessen.

Die Vertiefung 20 weist einen größten Abstand c zur Nietbolzenachse 18 auf. Bei symmetrischer Gestaltung entspricht der größte Abstand c dem halben Durchmesser der Vertiefung 20. Der größte Abstand c der Vertiefung 20 zur Nietbolzenachse 18 entspricht vorteilhaft mindestens 110 % des größten Abstands a des Vertiefungsbodens 21 zur Nietbolzenachse 18. Der größte Abstand c der Vertiefung 20 zur Nietbolzenachse 18 entspricht vorteilhaft 70 % bis 120 % des halben Kerndurchmessers d des Nietbolzens 4. Der halbe Kerndurchmesser d entspricht dem Kernradius d/2. Vorteilhaft ragt die Vertiefung 20 in radialer Richtung zur Nietbolzenachse 18 in Blickrichtung der Nietbolzenachse 18 über den Nietbolzenabschnitt 28, in dem der Kerndurchmesser d gemessen ist, hinaus. Bevorzugt beträgt der halbe vergrößerte Außendurchmesser b des Nietkopfs 14 das 1,5fache bis 3,5fache, insbesondere das 2fache bis 3,5fache des größten Abstands a.

Der linke Nietkopf 14 weist eine parallel zur Nietbolzenachse 18 gemessene Höhe h auf. Die Höhe h ist vorteilhaft größer als eine parallel zur Nietbolzenachse 18 gemessene Tiefe f der Vertiefung 20. Die Tiefe f beträgt insbesondere weniger als 50 %, insbesondere weniger als 30 % der Höhe h. Die Tiefe f der Vertiefung 20 ist vorteilhaft kleiner als der größte Abstand a des Vertiefungsbodens 21 zur Nietbolzenachse 18. Bevorzugt beträgt die Tiefe f weniger als 40 %, insbesondere weniger als 30 % des größten Abstands a.

Das Verbindungsglied 2 weist eine parallel zur Nietbolzenachse 18 gemessene Dicke m auf. Die Fase 25 weist eine in gleicher Richtung gemessene Tiefe k auf. Die Tiefe k beträgt vorteilhaft höchstens 30 %, insbesondere höchstens 20 % der Dicke m des Verbindungsglieds 2.

Im Ausführungsbeispiel sind die beiden Nietköpfe 13 und 14 unterschiedlich ausgebildet. Der rechte Nietkopf 13 weist im Ausführungsbeispiel keine Vertiefung 20 auf. Die Stirnseite 33 schneidet die Nietbolzenachse 18 in einem Schnittpunkt 26. Die Stirnseite 33 weist zur Mittelebene 19 einen Abstand n auf. Ausgehend vom Schnittpunkt 26 verringert sich der Abstand n mit zunehmendem radialem Abstand zur Nietbolzenachse 18. In Fig. 6 ist ein Abstand n nahe der Nietbolzenachse 18 exemplarisch eingezeichnet. Die Durchmesser b beider Nietköpfe 13 und 14 sind im Ausführungsbeispiel gleich groß. Der rechte Nietkopf 13 weist eine Höhe g auf, die parallel zur Nietbolzenachse 18 gemessen ist. Im Ausführungsbeispiel ist die Höhe g des rechten Nietkopfs 13 kleiner als die Höhe h des linken Nietkopfs 14, der die Vertiefung 20 aufweist. Die erste Stirnseite 33 verläuft konvex. Die Krümmung der ersten Stirnseite 33 im Durchmesserbereich des Vertiefungsbodens 21' ist spiegelsymmetrisch zur Krümmung des Vertiefungsbodens 21' im gleichen Durchmesserbereich an der zweiten Stirnseite 34. Die Krümmung des Vertiefungsbodens 21' ist in Fig. 6 der besseren Darstellbarkeit wegen übertrieben dargestellt. Tatsächlich verläuft der gekrümmte Vertiefungsboden 21' flacher als dargestellt.

Der Abstand n des Schnittpunkts 26 an der ersten Stirnseite 33 und der Abstand e des Schnittpunkts 27 an der zweiten Stirnseite 34 zur Mittelebene 17 sind vorzugsweise näherungsweise gleich groß. Die Differenz der Abstände n und e an den Schnittpunkten 26 und 27 beträgt vorteilhaft weniger als 0,3 mm, insbesondere weniger als 0,1 mm. Bevorzugt sind die Abstände n und e im Rahmen der Fertigungstoleranzen gleich groß. Die vorstehend beschriebene Gestaltung von Nietbolzen 4 kann auch für anders aufgebaute Sägeketten 1 innerhalb dem Schutzumfang der Ansprüche 1 und 10 vorgesehen sein.

## Patentansprüche

1. Sägekette umfassend Verbindungsglieder (2) und Treibglieder (3), die mittels Nietbolzen (4) um Nietbolzenachsen (18) gelenkig miteinander verbunden sind, wobei die Nietbolzen (4) durch mindestens eine Nietöffnung (11) mindestens eines Verbindungsglieds (2) und eine Nietöffnung (12) eines zwischen zwei Verbindungsgliedern (2) angeordneten Treibglieds (3) ragen, wobei die Sägekette (1) eine Mittelebene (19) aufweist, die senkrecht zu den Nietbolzenachsen (18) und mittig durch die Treibglieder (3) verläuft, wobei die Verbindungsglieder (2) teilweise als Schneidglieder (5, 6) ausgebildet sind und einen Schneidabschnitt (7) aufweisen, wobei mindestens ein Nietbolzen (4) an mindestens einer Stirnseite (34) eine Vertiefung (20) aufweist,
**dadurch gekennzeichnet, dass** die Vertiefung (20) einen Vertiefungsrand (22) aufweist, wobei der Abstand (q) des Vertiefungsrands (22) zur Mittelebene (19) der Sägekette (1) mit zunehmendem radialem Abstand zur Nietbolzenachse (18) zunimmt, dass die Vertiefung (20) einen Vertiefungsboden (21, 21') aufweist, der vom Vertiefungsrand (22) umschlossen ist, wobei der Abstand (e) des Vertiefungsbodens (21, 21') zur Mittelebene (19) der Sägekette (1) mit zunehmendem radialem Abstand zur Nietbolzenachse (18) an keiner Stelle des Vertiefungsbodens (21, 21') zunimmt, und dass der größte Abstand (a) des Vertiefungsbodens (21, 21') zur Nietbolzenachse (18) 30% bis 100% des halben Kerndurchmessers (d) des Nietbolzens (4) entspricht.

2. Sägekette nach Anspruch 1,
**dadurch gekennzeichnet, dass** der Vertiefungsboden (21') konvex gewölbt ausgebildet ist.

3. Sägekette nach Anspruch 1 oder 2,
**dadurch gekennzeichnet, dass** der größte Abstand (a) des Vertiefungsbodens (21, 21') zur Nietbolzenachse (18) höchstens 80 % des halben Kerndurchmessers (d) des Nietbolzens (4) entspricht.

4. Sägekette nach einem der Ansprüche 1 bis 3,
**dadurch gekennzeichnet, dass** der größte Abstand (c) der Vertiefung (20) zur Nietbolzenachse (18) mindestens 110% des größten Abstands (a) des Vertiefungsbodens (21) zur Nietbolzenachse (18) entspricht.

5. Sägekette nach einem der Ansprüche 1 bis 4,
**dadurch gekennzeichnet, dass** die parallel zur Nietbolzenachse (18) gemessene Tiefe (f) der Vertiefung (20) kleiner als der größte Abstand (a) des Vertiefungsbodens (21, 21') zur Nietbolzenachse (18) ist, insbesondere weniger als 40 %, vorteilhaft weniger als 30 % des größten Abstands (a) beträgt.

6. Sägekette nach einem der Ansprüche 1 bis 5,
**dadurch gekennzeichnet, dass** mindestens eine Stirnseite (33, 34) eines Nietbolzens (4) an einem Nietkopf (13, 14) mit vergrößertem Außendurchmesser (b) ausgebildet ist, der über die Außenfläche (23) des zugeordneten Verbindungsglieds (2) ragt.

7. Sägekette nach Anspruch 6,
**dadurch gekennzeichnet, dass** das Verhältnis des halben vergrößerten Außendurchmessers (b) des Nietkopfs (14) zum größten Abstand (a) des Vertiefungsbodens (21, 21') zur Nietbolzenachse (18) von 1,5 bis 3,5 beträgt.

8. Sägekette nach einem der Ansprüche 1 bis 7,
**dadurch gekennzeichnet, dass** das Verbindungsglied (2) an der Nietöffnung (11) eine Fase (25) aufweist, deren Tiefe (k) höchstens 30%, insbesondere höchstens 20% der Dicke (m) des Verbindungsglieds (2) beträgt.

9. Sägekette nach einem der Ansprüche 1 bis 8,
**dadurch gekennzeichnet, dass** der Nietbolzen (4) einen Bund (24) aufweist, der in der Nietöffnung (12) des Treibglieds (3) angeordnet ist und nicht in die Nietöffnungen (11) der Verbindungsglieder (2) ragt.

10. Sägekette nach einem der Ansprüche 1 bis 9 oder nach dem Oberbegriff des Anspruchs 1,
**dadurch gekennzeichnet, dass** der Nietbolzen (4) als Vollkörper ausgebildet ist und dass der Nietbolzen (4) eine erste Stirnseite (33) und eine zweite Stirnseite (34) aufweist, die unterschiedlich ausgebildet sind.

11. Sägekette nach Anspruch 9,
**dadurch gekennzeichnet, dass** die zweite Stirnseite (34) die Vertiefung (20) aufweist und die erste Stirnseite (33) keine Vertiefung (20) aufweist.

12. Sägekette nach Anspruch 10 oder 11,
**dadurch gekennzeichnet, dass** die erste Stirnseite (33) an einem ersten Nietkopf (13) ausgebildet ist und die zweite Stirnseite (34) an einem zweiten Nietkopf (14) und dass die in Richtung der Nietbolzenachse (18) gemessene Höhe (h) des zweiten Nietkopfs (14) größer als die in Richtung der Nietbolzenachse (18) gemessene Höhe (g) des ersten Nietkopfs (13) ist.

13. Sägekette nach einem der Ansprüche 10 bis 12,
**dadurch gekennzeichnet, dass** die erste Stirnseite (33) konvex ausgebildet ist.

14. Sägekette nach einem der Ansprüche 10 bis 13,
**dadurch gekennzeichnet, dass** die Krümmung der ersten Stirnseite (33) im Durchmesserbereich des Vertiefungsbodens (21') spiegelsymmetrisch zur Krümmung des Vertiefungsbodens (21') im gleichen Durchmesserbereich an der zweiten Stirnseite (34) ist.

15. Sägekette nach einem der Ansprüche 10 bis 14,
**dadurch gekennzeichnet, dass** die Differenz des Abstands (n) der ersten Stirnseite (33) am Schnittpunkt (26) der Nietbolzenachse (18) mit der ersten Stirnseite (33) zur Mittelebene (19) und des Abstands (e) der zweiten Stirnseite (34) am Schnittpunkt (27) der Nietbolzenachse (18) mit der zweiten Stirnseite (34) zur Mittelebene (19) weniger als 0,3 mm beträgt.

16. Sägekette nach einem der Ansprüche 10 bis 15,
**dadurch gekennzeichnet, dass** mindestens eine Stirnseite (33, 34) des Nietbolzens (4) an einem Nietkopf (13, 14) mit vergrößertem Außendurchmesser (b) ausgebildet ist, der über die Außenfläche (23) des zugeordneten Verbindungsglieds (2) ragt.

## Claims

1. Saw chain comprising connecting links (2) and drive links (3), which are connected to one another in an articulated manner about rivet bolt axes (18) by means of rivet bolts (4), wherein the rivet bolts (4) protrude through at least one rivet opening (11) of at least one connecting link (2) and a rivet opening (12) of a drive link (3) disposed between two connecting links (2), wherein the saw chain (1) has a central plane (19) which extends perpendicularly to the rivet bolt axes (18) and centrically through the drive links (3), wherein the connecting links (2) are partially formed as cutting links (5, 6) and have a cutting portion (7), wherein at least one rivet bolt (4) has a recess (20) on at least one end face (34),
**characterized in that** the recess (20) has a recess edge (22), wherein the spacing (q) of the recess edge (22) from the central plane (19) of the saw chain (1) increases with increasing radial spacing from the rivet bolt axis (18), **in that** the recess (20) has a recess bottom (21, 21') enclosed by the recess edge (22), wherein the spacing (e) of the recess bottom (21, 21') from the central plane (19) of the saw chain (1) at no point in the recess bottom (21, 21') increases with increasing radial spacing from the rivet bolt axis (18), and **in that** the largest spacing (a) of the recess bottom (21, 21') from the rivet bolt axis (18) corresponds to 30% to 100% of half the core diameter (d) of the rivet bolt (4).

2. Saw chain according to Claim 1,
**characterized in that** the recess bottom (21') is of a convexly curved design.

3. Saw chain according to Claim 1 or 2,
**characterized in that** the largest spacing (a) of the recess bottom (21, 21') from the rivet bolt axis (18) corresponds to a maximum of 80% of half the core diameter (d) of the rivet bolt (4).

4. Saw chain according to one of Claims 1 to 3,
**characterized in that** the largest spacing (c) of the recess (20) from the rivet bolt axis (18) corresponds to at least 110% of the largest spacing (a) of the recess bottom (21) from the rivet bolt axis (18).

5. Saw chain according to one of Claims 1 to 4,
**characterized in that** the depth (f) of the recess (20) measured parallel to the rivet bolt axis (18) is smaller than the largest spacing (a) of the recess bottom (21, 21') from the rivet bolt axis (18), in particular is less than 40%, advantageously less than 30%, of the largest spacing (a).

6. Saw chain according to one of Claims 1 to 5,
**characterized in that** at least one end face (33, 34) of a rivet bolt (4) is formed on a rivet head (13, 14) with an enlarged outer diameter (b) which projects beyond the outer surface (23) of the assigned connecting link (2).

7. Saw chain according to Claim 6,
**characterized in that** the ratio of half the enlarged outer diameter (b) of the rivet head (14) to the largest spacing (a) of the recess bottom (21, 21') from the rivet bolt axis (18) is from 1.5 to 3.5.

8. Saw chain according to one of Claims 1 to 7,
**characterized in that** the connecting link (2) at the rivet opening (11) has a chamfer (25), the depth (k) of the latter being at most 30%, in particular at most 20%, of the thickness (m) of the connecting link (2).

9. Saw chain according to one of Claims 1 to 8,
**characterized in that** the rivet bolt (4) has a collar (24) which is disposed in the rivet opening (12) of the drive link (3) and does not protrude into the rivet openings (11) of the connecting links (2).

10. Saw chain according to one of Claims 1 to 9, or according to the preamble of Claim 1,
**characterized in that** the rivet bolt (4) is formed as a solid body and **in that** the rivet bolt (4) has a first end face (33) and a second end face (34), which are of different designs.

11. Saw chain according to Claim 9,
**characterized in that** the second end face (34) has the recess (20), and the first end face (33) has no recess (20).

12. Saw chain according to Claim 10 or 11,
**characterized in that** the first end face (33) is formed on a first rivet head (13), and the second end face (34) is formed on a second rivet head (14), and **in that** the height (h) of the second rivet head (14) measured in the direction of the rivet bolt axis (18) is greater than the height (g) of the first rivet head (13) measured in the direction of the rivet bolt axis (18).

13. Saw chain according to one of Claims 10 to 12,
**characterized in that** the first end face (33) is of a convex design.

14. Saw chain according to one of Claims 10 to 13,
**characterized in that** the curvature of the first end face (33) in the diameter region of the recess bottom (21') is mirror symmetrical to the curvature of the recess bottom (21') in the same diameter region on the second end face (34).

15. Saw chain according to one of Claims 10 to 14,
**characterized in that** the difference between the spacing (n) of the first end face (33) at the point of intersection (26) of the rivet bolt axis (18) and the first end face (33) from the central plane (19) and the spacing (e) of the second end face (34) at the point of intersection (27) of the rivet bolt axis (18) and the second end face (34) from the central plane (19), is less than 0.3 mm.

16. Saw chain according to one of Claims 10 to 15,
**characterized in that** at least one end face (33, 34) of the rivet bolt (4) is formed on a rivet head (13, 14) with an enlarged outer diameter (b) which projects beyond the outer surface (23) of the assigned connecting link (2).

## Revendications

1. Chaîne de sciage comprenant des maillons de liaison (2) et des maillons d'entraînement (3) qui sont reliés entre eux de manière articulée au moyen de boulons de rivetage (4) autour d'axes de boulons de rivetage (18), les boulons de rivetage (4) faisant saillie à travers au moins une ouverture de rivetage (11) d'au moins un maillon de liaison (2) et une ouverture de rivetage (12) d'un maillon d'entraînement (3) agencé entre deux maillons de liaison (2), la chaîne de sciage (1) présentant un plan médian (19) qui s'étend perpendiculairement aux axes de boulons de rivetage (18) et au milieu à travers les maillons d'entraînement (3), les maillons de liaison (2) étant partiellement réalisés sous forme de maillons de coupe (5, 6) et présentant une section de coupe (7), au moins un boulon de rivetage (4) présentant un renfoncement (20) sur au moins un côté frontal (34), **caractérisée en ce que** le renfoncement (20) présente un bord de renfoncement (22), la distance (q) du bord de renfoncement (22) par rapport au plan médian (19) de la chaîne de sciage (1) augmentant lorsque la distance radiale par rapport à l'axe de boulon de rivetage (18) augmente, **en ce que** le renfoncement (20) présente un fond de renfoncement (21, 21') qui est entouré par le bord de renfoncement (22), la distance (e) du fond de renfoncement (21, 21') par rapport au plan médian (19) de la chaîne de sciage (1) n'augmentant à aucun endroit du fond de renfoncement (21, 21') lorsque la distance radiale par rapport à l'axe de boulon de rivetage (18) augmente, et **en ce que** la plus grande distance (a) du fond de renfoncement (21, 21') par rapport à l'axe de boulon de rivetage (18) correspond à 30 % à 100 % du demi-diamètre de noyau (d) du boulon de rivetage (4).

2. Chaîne de sciage selon la revendication 1,
**caractérisée en ce que** le fond de renfoncement (21') est réalisé sous forme bombée de manière convexe.

3. Chaîne de sciage selon la revendication 1 ou 2,
**caractérisée en ce que** la distance maximale (a) du fond de renfoncement (21, 21') par rapport à l'axe de boulon de rivetage (18) correspond au plus à 80 % du demi-diamètre de noyau (d) du boulon de rivetage (4).

4. Chaîne de sciage selon l'une quelconque des revendications 1 à 3, **caractérisée en ce que** la distance maximale (c) du renfoncement (20) par rapport à l'axe de boulon de rivetage (18) correspond à au moins 110 % de la distance maximale (a) du fond de renfoncement (21) par rapport à l'axe de boulon de rivetage (18).

5. Chaîne de sciage selon l'une quelconque des revendications 1 à 4, **caractérisée en ce que** la profondeur (f) du renfoncement (20), mesurée parallèlement à l'axe de boulon de rivetage (18), est inférieure à la plus grande distance (a) du fond de renfoncement (21, 21') par rapport à l'axe de boulon de rivetage (18), notamment inférieure à 40 %, avantageusement inférieure à 30 % de la plus grande distance (a).

6. Chaîne de sciage selon l'une quelconque des revendications 1 à 5, **caractérisée en ce qu'**au moins un côté frontal (33, 34) d'un boulon de rivetage (4) est réalisé sur une tête de rivetage (13, 14) ayant un diamètre extérieur agrandi (b) qui fait saillie de la surface extérieure (23) du maillon de liaison associé (2).

7. Chaîne de sciage selon la revendication 6,
**caractérisée en ce que** le rapport entre la moitié du diamètre extérieur agrandi (b) de la tête de rivetage (14) et la plus grande distance (a) du fond de renfoncement (21, 21') par rapport à l'axe de boulon de rivetage (18) est de 1,5 à 3,5.

8. Chaîne de sciage selon l'une quelconque des revendications 1 à 7, **caractérisée en ce que** le maillon de liaison (2) présente, au niveau de l'ouverture de rivetage (11), un chanfrein (25) dont la profondeur (k) représente au plus 30 %, notamment au plus 20 % de l'épaisseur (m) du maillon de liaison (2).

9. Chaîne de sciage selon l'une quelconque des revendications 1 à 8, **caractérisée en ce que** le boulon de rivetage (4) présente une collerette (24) qui est agencée dans l'ouverture de rivetage (12) du maillon d'entraînement (3) et ne fait pas saillie dans les ouvertures de rivetage (11) des maillons de liaison (2).

10. Chaîne de sciage selon l'une quelconque des revendications 1 à 9 ou selon le préambule de la revendication 1,
**caractérisée en ce que** le boulon de rivetage (4) est réalisé sous forme de corps plein et **en ce que** le boulon de rivetage (4) présente un premier côté frontal (33) et un deuxième côté frontal (34) qui sont réalisés différemment.

11. Chaîne de sciage selon la revendication 9,
**caractérisée en ce que** le deuxième côté frontal (34) présente le renfoncement (20) et le premier côté frontal (33) ne présente pas de renfoncement (20).

12. Chaîne de sciage selon la revendication 10 ou 11,
**caractérisée en ce que** le premier côté frontal (33) est réalisé sur une première tête de rivetage (13) et le deuxième côté frontal (34) est réalisé sur une deuxième tête de rivetage (14) et **en ce que** la hauteur (h) de la deuxième tête de rivetage (14), mesurée dans la direction de l'axe de boulon de rivetage (18), est supérieure à la hauteur (g) de la première tête de rivetage (13), mesurée dans la direction de l'axe de boulon de rivetage (18).

13. Chaîne de sciage selon l'une quelconque des revendications 10 à 12, **caractérisée en ce que** le premier côté frontal (33) est réalisé sous forme convexe.

14. Chaîne de sciage selon l'une quelconque des revendications 10 à 13, **caractérisée en ce que** la courbure du premier côté frontal (33) dans la zone de diamètre du fond de renfoncement (21') est symétrique à la courbure du fond de renfoncement (21') dans la même zone de diamètre sur le deuxième côté frontal (34).

15. Chaîne de sciage selon l'une quelconque des revendications 10 à 14, **caractérisée en ce que** la différence entre la distance (n) du premier côté frontal (33) au point d'intersection (26) de l'axe de boulon de rivetage (18) avec le premier côté frontal (33) par rapport au plan médian (19) et la distance (e) du deuxième côté frontal (34) au point d'intersection (27) de l'axe de boulon de rivage (18) avec le deuxième côté frontal (34) par rapport au plan médian (19) est inférieure à 0,3 mm.

16. Chaîne de sciage selon l'une quelconque des revendications 10 à 15, **caractérisée en ce qu'**au moins un côté frontal (33, 34) du boulon de rivetage (4) est réalisé sur une tête de rivetage (13, 14) ayant un diamètre extérieur agrandi (b) qui fait saillie de la surface extérieure (23) du maillon de liaison associé (2).
